# EUROPEAN PATENT SPECIFICATION

(11) **EP 0 842 106 B1**
(45) Date of publication and mention of the grant of the patent: **11.10.2000**
(21) Application number: 96926402.7
(22) Date of filing: 05.08.1996
(51) Int. Cl.: B65G 57/081, B65G 47/248, B65B 35/26

(54) **AN APPARATUS FOR PACKING SPIKE PLATES OR THE LIKE**
VORRICHTUNG ZUM VERPACKEN VON MIT DORNEN VERSEHENEN PLATTEN ODER DERGLEICHEN
APPAREIL POUR EMBALLER DES PLAQUES A POINTES OU SIMILAIRE

(30) Priority: 04.08.1995 FI 953735
(43) Date of publication of application: 20.05.1998
(73) Proprietor: MiTek Holdings, Inc., Wilmington, Delaware 19801-1612 (US)
(72) Inventor: KARHUMÄKI, Markku, FIN-11710 Riihimäki (FI)
(74) Representative: Hakola, Unto Tapani
(86) International application number: PCT/FI96/00429
(87) International publication number: WO 97/06083

(56) References cited:
- DE-A- 2 532 410
- DE-C- 3 237 255
- DE-C- 3 636 646

## Description

The present invention relates to an apparatus for packing spike plates or the like, as disclosed in the preamble portion of the appended claim 1.

The spike plates are manufactured for example so that from a metal blank are separated rectangular-shaped plates, from which further for example by stamping are separated preferably acute-pointed triangular parts to be bent to a substantially perpendicular position with respect to said plate to form spikes, whereby the finished spike plates comprise several parallel spike rows. The spikes can be formed also in a continuous band-like metal blank, wherefrom the individual plates are separated by cutting. Spike plates and manufacturing methods thereof are shown for example in US Patents 4,527,933 and 3,479,919.

From the manufacturing process the spike plates come to the after-treatment, such as packing, in a uniform position, as a rule so that the spike portions point upwards. The finished spike plates are packed, depending on the manner they are finally used, as a stack either so that the spike portions in the package are directed to the same direction, or most preferably so that the spike plates are formed into pairs, where the spike portions of the spike plates lie opposite to each other as the spikes get between the others. In the latter case, it is necessary to turn preferably every second spike plate upside down, i.e. with the spike portions downwards, already before the packing step to form the above-mentioned pairs of spike plates. The turning can be performed either manually or in an automated manner, depending on the size, manufacturing speed or amount of the spike plates.

In known automatic solutions for turning the spike plates to form the pairs, belt conveyors or the like are usually used between the manufacturing step and packing step. In a known technical solution the conveyors, which usually are two or more in number, always an even number, lie parallelly. On one of the conveyors of a pair the spike plates are introduced for conveying them unturned to the stacking point which is located before the packing step, and the spike plates which are to be turned are introduced on the other one for conveying them to the turning point. The latter of said conveyors conveys the spike plates to the end, where a swinging arm, pivotable in a plane perpendicular to the transfer direction of the conveyors, turns the spike plate along a semi-circular path downwards on top of a spike plate that has entered the stacking point through the end of the first conveyor. The turned and unturned spike plates are arranged to enter the stacking point alternately, whereby they are automatically formed into above-described pairs of spike plates.

Manual turning and stacking of spike plates is slow and increases the production costs of spike plates and is not therefore suitable for a manufacturing process of large capacity. Known automated solutions require considerable floor area both longitudinally and laterally because of parallel conveyors or transfer paths. Further, guiding the spike plates to two parallel conveyors and further away from the conveyors requires the use of additional devices and/or manual operation. The swinging arm of a known apparatus for turning the spike plates requires a long path of movement and return movement, which decreases the handling capacity. A similar approach is represented by German Patent No. 32 37 255 showing an apparatus for stacking grid plates coming along two parallel lines.

It is an object of the present invention to provide an apparatus for packing spike plates helping greatly to eliminate the above described drawbacks associated with known solutions and thus to improve the current state of the art. For reaching this goal, the invention is mainly characterized by what is disclosed in the characterizing portion of the independent claim 1.

In the apparatus according to the invention, the transfer of the spike plates to the stacking point without turning takes place along a line parallel to the transfer line of the spike plates which are to be turned, and the turning of the spike plates is performed gradually along a transfer path parallel to the transfer path of the spike plates left unturned, preferably above the latter. The functioning of the apparatus does not require separate devices or manual work for dividing the spike plates in lateral direction into those which will be turned and those which will not be turned while they are being transferred from the manufacturing process to be conveyed by the apparatus, and also the stacking of the spike plates in the end of the transfer paths takes place automatically. One important advantage of the apparatus according to the invention is just the fact that the floor area or the like required by it is considerably smaller both in lateral and longitudinal direction compared with known solutions. An advantage resides also in the fact that the apparatus can be adjusted with quite small modifying operations and without any accessory devices to work according to length, width or other dimensions of the spike plates to be packed in that moment. The apparatus according to the invention can also be linked several in number after one manufacturing process.

Other characteristic features of the invention appear from the appended dependent claims.

The invention will be illustrated more closely in the following description with reference to the accompanying drawings, wherein
- Figure 1: is a side view of the apparatus,
- Figure 2: is a top view of the apparatus,
- Figure 3: is a representation of section A―A, and
- Figure 4: is a representation of section B―B.

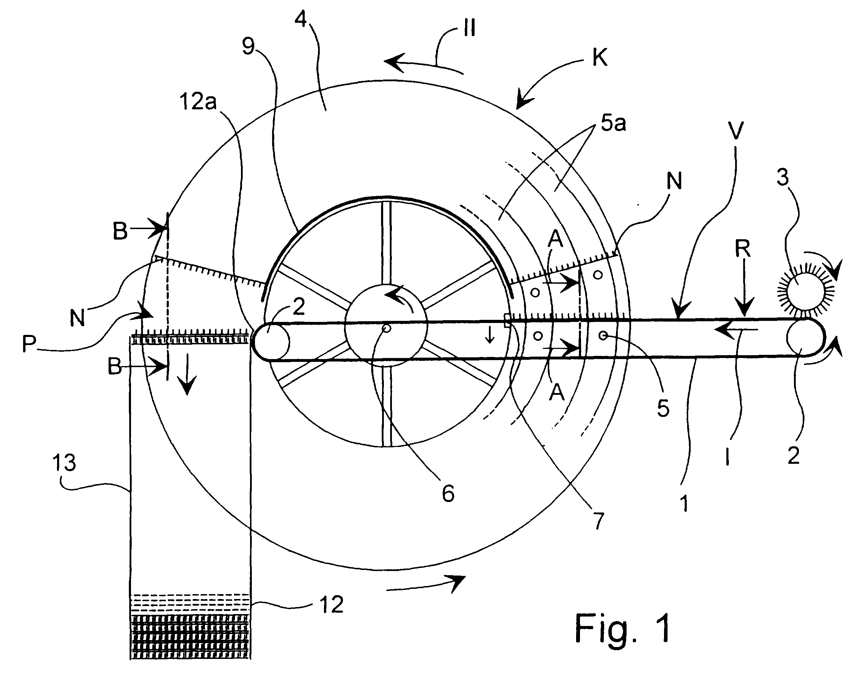

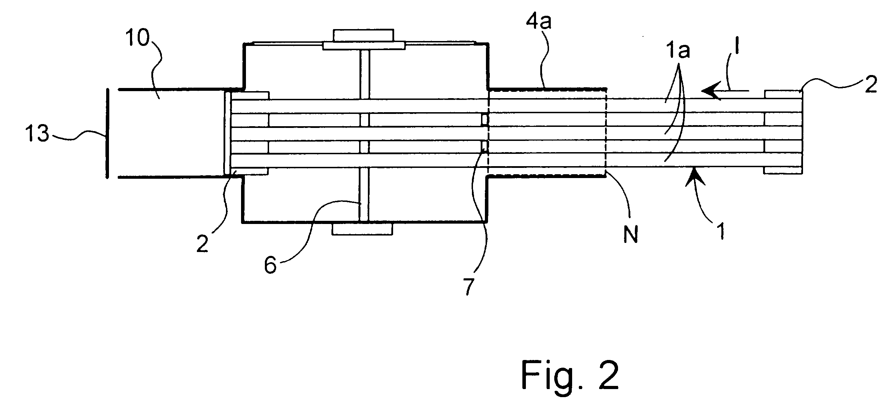

The apparatus according to the invention comprises a horizontal conveyor V, which is preferably a belt conveyor comprising a conveyor belt 1 and for its moving at least two rolls 2 according to the embodiment of Figs. 1 and 2. The horizontal conveyor V is supplied by means of a feed roll 3 or the like during the movement of the conveyor belt 1 towards direction I with spike plates N coming from the manufacturing process. The horizontal conveyor V is placed to form a direct extension of the manufacturing line of the spike plates. The spike plates are fed in a position where their spike portions are pointing upwards from the spike plate. The horizontal conveyor V transfers the spike plates N to a stacking point P situated at the other end of the horizontal conveyor as an extension thereof. From this point, the spike plates are further transferred in a stack to be packed into boxes, onto pallets or the like.

The apparatus includes also a turning conveyor K for conveying the spike plates N to the stacking point P in a position where they are turned upside down for the purpose of achieving a stack of spike plates together with the horizontal conveyor V. In the stack the spike plates are pairwise arranged in such a way that the spike portions in each pair of spike plates are in an interspersed relationship with respect to each other. The turning conveyor K includes two parallel vertical disk-shaped support walls 4, which are connected to a common horizontal axle 6 and provided for rotation thereabout in the direction of arrow II. As it is apparent from Figs. 1 and 2, the horizontal conveyor V lies partly between the support walls 4, and it is further positioned so that the upper section of the conveyor belt 1 travels preferably so close to the centre of the turning conveyor and consequently to the axle 6 as possible above it. In accordance with Figs. 1 and 2, in the space between the support walls 4, an annular plate housing 10 is distinguishable being limited by the outermost portions 4a of the support walls and slide barriers 9, which prevent the spike plates from sliding in the direction of their planes from the plate housing 10 towards the centre of the turning conveyor K. The slide barrier 9 can have for example the construction of a batten or the like provided close to the support wall 4 and forming the abutment for the end towards the axle 6 of a spike plate situated in the plate housing 10. The slide barrier 9 can be attached stationary in the frame of the apparatus so that it extends above the horizontal conveyor V.

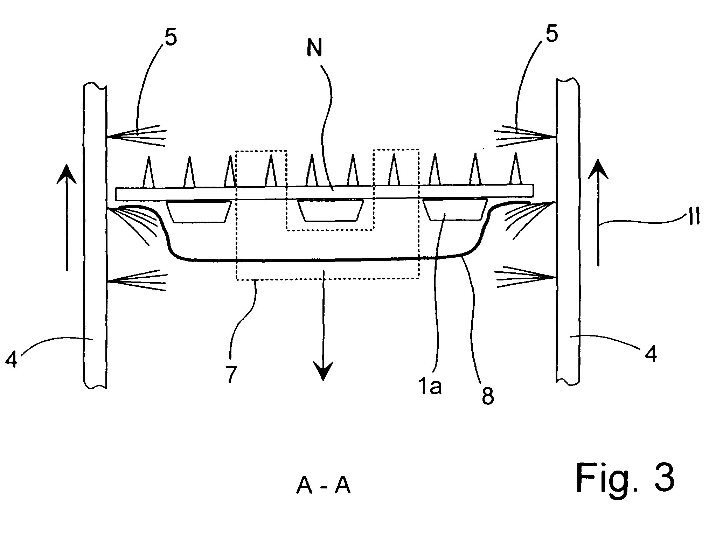

In accordance with Figs. 1, 3 and 4, substantially horizontal support means 5 are placed on the support walls 4 within the area of the portions 4a. The support means are preferably two in number successively on the same radius of the support wall 4, being further so placed that the support means 5 situated on the mutually opposite support walls 4 form two pairs of support means within the plate housing 10 along the same radius, preferably in the same horizontal plane, which pairs are further situated regularly spaced on the periphery of the support walls 4. The support means are pivotable pins, shelves or the like relatively short in construction, connected to the support walls 4 through hinges or through a corresponding method, or according to an advantageous solution of Fig. 3, means consisting of flexible bristles. The purpose of the support means 5 is to receive a spike plate N from the conveyor belt 1 of the horizontal conveyor V to carry it while the turning conveyor K is rotating in direction II, whereby the spike plate N will be transferred during the rotation movement to the stacking point P while being turned upside down simultaneously. The support means 5 can be mounted according to an advantageous solution of Fig. 1 as support strips 5a or the like containing pre-assembled support means 5 at regular intervals. For assembling the support strips in the support walls 4, the support walls can be further provided with assembly grooves or the like, where the support strips can be sunk. Said assembly grooves are not shown in the accompanying figures.

Hence, the turning conveyor K will turn gradually the spike plates N around with respect to their planes while travelling along a transfer path parallel to the transfer path of the horizontal conveyor V, and the turning conveyor can contain several plates existing in different phases, only a short movement being sufficient for stacking.

For separating the spike plates N to be turned and consequently to be guided to the plate housing 10 from the horizontal conveyor V, the path of travel of the spike plates advancing on the conveyor is equipped with a distributor 7, the purpose of which is to stop within the plate housing 10 a spike plate to be separated. According to an advantageous embodiments of Figs. 2―4, the conveyor belt 1 consists of three separate parallel belts 1a or the like, preferably of cone belts guided by the rolls, and the distributor 7 is adapted to alternately rise from gaps between the belts in front of a spike plate N to be separated in that moment to stop it and to bring it to be carried by the support means 5, and to be lowered to allow a spike plate to continue its travel on the conveyor belt 1 towards the stacking point P. So that the entry of the spike plate to be turned to the stacking point P could take place in a synchronous manner, it must be guided to right support means 5 passing the conveyor belt 1. For carrying out this function, the separation or diverting point aligned with the plate housing 10 is provided with a rising and falling support guide 8, the ends towards the support walls 4 of which in the upper position of the support guide 8 prevent the support means 5 from entraining the spike plate situated at the support guide 8 by turning the support means 5 preferably downwards. On the other hand, the support guide will also in this event be so situated that it does not prevent the travel of the spike plate on the horizontal conveyor V. As the distributor 7 rises to stop the spike plate to be turned in the plate housing 10, the support guide 8 is lowered down, whereby the spike plate will be lifted on the adjacent support means 5 up from the horizontal conveyor V. Thereafter the distributor 7 and the support guide 8 are returned to their previous positions and the next spike plate will have a clear passage on the horizontal conveyor V towards the stacking point P.

Another possibility to shift a spike plate N to be turned to lie supported by the support means 5 is to arrange at the stop point of the spike plate below the horizontal conveyor V a lifting means, which rises from between the belts 1a and lifts in the direction of the movement of the turning conveyor K the spike plate N up from the horizontal conveyor. If there is a risk that the densely spaced support means 5 will come to lie directly in the way of the conveyed spike plates, barriers can be arranged on the level of the spike edges for bending the flexible support means 5 possibly lying on the same level with the conveyor away from the obstructing position, by being in a fixed position or movable in the direction of the conveyor V.

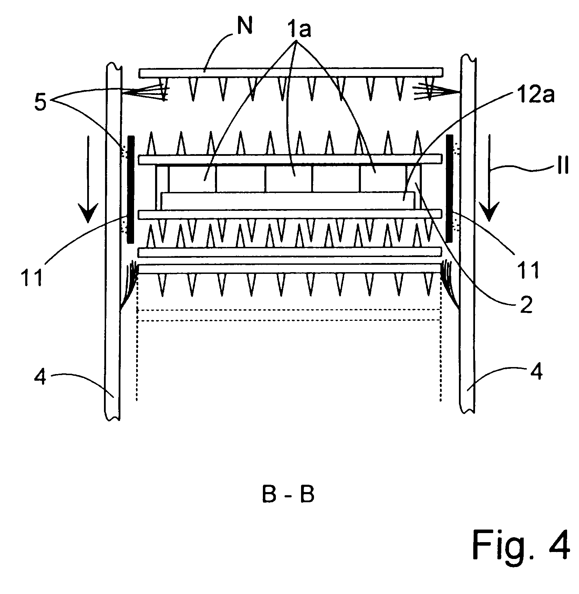

After the spike plate has passed its uppermost position during the rotational movement of the turning conveyor K it will fall to the support of the support means 5 travelling ahead while being lowered towards the stacking point P, where it is laid on top of a spike plate that is in uppermost position in the stack of spike plates and has entered from the horizontal conveyor V. At this moment, the spike portions of these spike plates will be placed between each other. For releasing the spike plate from the support for the support means 5 the stacking point P is provided on both sides of the stack of spike plates with releasers 11, which turn the support means 5 contacting them away to lie parallelly with the support walls 4, the spike plate being thus allowed freely to fall on top of the stack of spike plates. The releasers 11 can be plate-like pieces in accordance with the advantageous embodiment of Fig. 4, being arranged stationary at the plate housing 10 or to move back and forth in a substantially horizontal direction into the plate housing 10 and away therefrom. The latter arrangement allows only the support means 5 supporting the releasable spike plate N to be in contact with the releasers 11, which arrangement is suitable to decrease the wear of the support means and releasers.

According to the advantageous embodiment of Fig. 1, the stacking point P is provided with a substantially vertical stacking shaft U, where the spike plates coming from the turning conveyor K and horizontal conveyor V are gathered for the after-treatment, such as for packing operation. The stacking shaft U comprises preferably at least a front wall 12 and a back wall 13 as well as, if needed, also side walls (not shown in the figures), of which a part can be constituted of the support walls 4. At the upper end of the front wall 12 as its immediate extension there is a guide extension 12a arched towards the horizontal conveyor V. The purpose of the extension is to guide a spike plate coming from the horizontal conveyor V into the stacking shaft U. The adjustment of the upper surface of the stack of spike plates can be accomplished with spring arrangements, hydraulically or in some other suitable known manner required by the after-treatment. The spike plates can travel down in the stacking shaft as a continuous stack being subjected to packing operation in the terminal end. The stacking shaft can continue straight down or be curved following a radius of suitable length. The end of the shaft can have a pusher which pushes a part stack emerging from the shaft in the direction of the planes of the spike plates towards the after-treatment.

The movements of the horizontal conveyor V, the turning conveyor K, the feed roll 3, the distributor 7 and the support guide 8 are accomplished by means of actuators known as such, for example by means of electric motors and/or pneumatically, and known solutions of control automatics can be used in the control of movements. It is clear that in particular according to the range of movements of the distributor 7 and the support guide 8, the conveyor belt of the horizontal conveyor V can be adapted to travel for example through a third roll 2 or the like disposed clearly below the horizontal level of the horizontal conveyor V.

The horizontal conveyor V is most preferably adapted to convey spike plates while the conveyor belt is rotating continuously, but alternatively to the continuous rotation wherein the rotational speeds of the horizontal conveyor V and turning conveyor K are fitted to transfer the spike plates in a synchronous manner to the stacking point P, the turning conveyor K can be provided also for rotation at predetermined intervals for predetermined periods, the support means 5 receiving on their support one spike plate during one period and for example simultaneously a spike plate is released from the support means at the stacking point P. The support means can also be located according to the movement lengths in such a manner that a spike plate to be fed to the turning conveyor K will always be received on some support means during the upwards directed movement period of the turning conveyor K, in which case the guide support 8 is unnecessary.

The modification of the apparatus and in particular the plate housing 10 to comply with different spike plate sizes can be accomplished in several manners. It is for example possible to use outermost portions 4a of the support wall 4 in different sizes or shapes or to adjust the distance between the support walls 4 on the axle 6 and to use further each time an appropriate support guide .

Further, before the turning conveyor K there can be a discharge device associated with the horizontal conveyor V. The purpose of this device is to remove samples or pieces containing the seal points between successive blank bands from the conveyor V. The discharge device, whose possible location is designated by arrow R in Fig. 1, can for example rise from beneath the conveyor V and turn the piece away from the conveyor.

The construction of the apparatus is not restricted only to the solutions shown in Figs. 1―4, but it can be varied within the inventional concept presented in the appended claims. The turning conveyor which turns the pieces around gradually during its transfer movement can be realized also using solutions of other kind. It is essential that the transfer part of the turning conveyor has several successive points before the stacking point to accommodate pieces in positions where they are successively more and more turned towards the stacking position by the effect of the transfer movement, allowing to turn the next piece to the stacking point only through a short transfer movement.

Finally, even if the apparatus is especially well suitable for handling spike plates, it can be applied to all plate-like pieces or generally pieces having two dimensions larger than a third one, where the pieces are identical to each other but the third dimension on one side of the plane of the piece is different from that on the opposite side to that extent that the stacking height can be reduced by turning the pieces so that the sides with identical structures face each other. Pieces where one of the flat sides has protrusions or projections and the other one is void of such protrusions or projections are typical examples.

A turning conveyor disc with an outer diameter under one meter is sufficient for packing normal-sized spike plates, which are used for example in roof trusses, resulting in minimal space requirement both in horizontal and vertical direction. However, the apparatus can be dimensioned to comply with various sizes and types of pieces to be packed.

## Claims

1. Apparatus for packing pieces having different structures on the opposite sides of their planes, such as spike plates, said apparatus comprising a horizontal conveyor (V) for conveying a piece to a stacking point (P), such that a structure of the piece increasing the stacking height of the pieces, such as projecting spikes of the spike plate (N), points in one direction, and a second conveyor for conveying a piece, the apparatus further comprising means for turning the piece conveyed by the second conveyor into a position where the structures of the piece point in the opposite direction, and for placing it on top of the first-mentioned piece in the stacking point (P), whereby the structures of said pieces will be placed against each other to reduce the stacking height, **characterized** in that the horizontal conveyor (V) is arranged to convey the pieces directly to the stacking point (P) and the second conveyor is a turning conveyor (K), which is adapted to turn each piece to be turned gradually during its transfer movement in a transfer path parallel to the horizontal conveyor (V) to a stacking position and to convey it to the stacking point (P) located at the end of the transfer path.

2. Apparatus according to claim 1, **characterized** in that the transfer path of the turning conveyor (K) is adapted to operate in the same longitudinal vertical plane parallel to the transfer path of the horizontal conveyor (V).

3. Apparatus according to claim 2, **characterized** in that the turning conveyor (K) is adapted to take the pieces to be turned from the horizontal conveyor (V) by means of its transfer movement.

4. Apparatus according to claim 2 or 3, **characterized** in that the transfer path of the turning conveyor (K) has the shape of a part of circle, preferably semicircle, and is located above the transfer path of the horizontal conveyor (V).

5. Apparatus according to claim 4, **characterized** in that the turning conveyor (K) includes two disk-shaped, substantially vertical support walls (4) or the like, the horizontal conveyor (V) being accommodated partly therebetween, the walls being equipped with support means (5) and being adapted to rotate around a substantially horizontal axle (6) or the like, whereby a piece to be turned located on the horizontal conveyor (V) is lifted up from the horizontal conveyor (V) while being supported by the support means (5), is turned upside down after the turning conveyor (K) has rotated half a revolution, and is transferred to the stacking point (P).

6. Apparatus according to claim 5, **characterized** in that one or several releasers (11) are arranged in the stacking point (P) to release the piece from the support means (5).

7. Apparatus according to claim 5 or 6, **characterized** in that the support means are attached to the support walls (4) turnably by means of hinges or the like and adapted in this way to be turned away from below the piece in the stacking point (P).

8. Apparatus according to claim 7, **characterized** in that each support means (5) is formed of a flexible member consisting of bristles.

9. Apparatus according to any of the preceding claims, **characterized** in that on the transfer path of the piece on the horizontal conveyor (V) is arranged a distributor (7) for stopping a piece to be diverted to the turning conveyor (K) in one position of the distributor and for allowing a piece to pass to convey it on the horizontal conveyor (V) to the stacking point (P) in the other position of the distributor.

10. Apparatus according to any of the preceding claims, **characterized** in that in the diverting point of the piece on the horizontal conveyor (V) there is arranged a support guide (8) or the like for placing a turnable piece on the support afforded by the support means (5) situated in the most suitable position and for preventing the engagement of support means (5) with a piece passing the diverting point.

11. Apparatus according to any of the preceding claims, **characterized** in that in the stacking point (P) is arranged a substantially vertical stacking shaft (U) or the like for stacking the pieces arriving from the horizontal conveyor (V) and turning conveyor (K).

12. Apparatus according to any of claims 5 to 11, **characterized** in that next to at least one of the support walls (4) or the like of the turning conveyor (K) there is a slide barrier (9) or the like for keeping the piece at a right distance from the axle (6) or the like serving as the centre of the turning conveyor (K).

## Patentansprüche

1. Vorrichtung zum Verpacken von Teilen mit unterschiedlichen Strukturen auf den gegenüberliegenden Seiten ihrer Ebenen, wie mit Dornen versehene Platten, wobei die Vorrichtung eine Horizontalfördereinrichtung (V) zum Transport eines Teils zu einem Stapelpunkt (P) umfaßt, so daß eine Struktur des Teils, die die Stapelhöhe der Teile erhöht, wie hervorstehende Dornen der mit Dornen versehenen Platte (N), in eine Richtung weist, sowie eine zweite Fördereinrichtung zum Transport eines Teils, wobei die Vorrichtung des weiteren Mittel aufweist zum Drehen des von der zweiten Fördereinrichtung transportierten Teils in eine Position, in der die Strukturen des Teils in die entgegengesetzte Richtung weisen, und zur Positionierung desselben auf die Oberseite des erstgenannten Teils an dem Stapelpunkt (P), wobei die Strukturen der Teile einander gegenüberliegend angeordnet werden, um die Stapelhöhe zu verringern, dadurch gekennzeichnet, daß die Horizontalfördereinrichtung (V) derart angeordnet ist, daß sie die Teile direkt zum Stapelpunkt (P) transportiert, und die zweite Fördereinrichtung eine Drehfördereinrichtung (K) ist, die jedes zu drehende Teil schrittweise während der Transferbewegung in einer Transferbahn parallel zu der Horizontalfördereinrichtung (V) in eine Stapelposition drehen und es zu dem am Ende der Transferbahn befindlichen Stapelpunkt (P) transportieren kann.

2. Vorrichtung gemäß Anspruch 1, dadurch gekennzeichnet, daß die Transferbahn der Drehfördereinrichtung (K) in derselben Längsvertikalebene parallel zur Transferbahn der Horizontalfördereinrichtung (V) betrieben werden kann.

3. Vorrichtung gemäß Anspruch 2, dadurch gekennzeichnet, daß die Drehfördereinrichtung (K) die zu drehenden Teile von der Horizontalfördereinrichtung (V) durch ihre Transferbewegung abnehmen kann.

4. Vorrichtung gemäß Anspruch 2 oder 3, dadurch gekennzeichnet, daß die Transferbahn der Drehfördereinrichtung (K) die Form eines Kreisabschnitts, vorzugsweise eines Halbkreises, aufweist und über der Transferbahn der Horizontalfördereinrichtung (V) angeordnet ist.

5. Vorrichtung gemäß Anspruch 4, dadurch gekennzeichnet, daß die Drehfördereinrichtung (K) zwei scheibenförmige, im wesentlichen vertikale Unterstützungswände (4) oder ähnliches aufweist, wobei die Horizontalfördereinrichtung (V) teilweise dazwischen angeordnet ist, wobei die Wände mit Unterstützungsmitteln (5) ausgerüstet sind und um eine im wesentliche horizontale Achse (6) oder ähnliches rotieren können, wobei ein zu drehendes Teil, das sich auf der Horizontalfördereinrichtung (V) befindet, von der Horizontalfördereinrichtung (V) abgehoben wird, während es von dem Unterstützungsmittel (5) unterstützt wird, durch Ausführung einer halben Drehung der Drehfördereinrichtung (K) umgedreht wird, und zu dem Stapelpunkt (P) transportiert wird.

6. Vorrichtung gemäß Anspruch 5, dadurch gekennzeichnet, daß eine Freigabevorrichtung oder mehrere Freigabevorrichtungen (11) an dem Stapelpunkt (P) vorgesehen sind, um das Teil von den Unterstützungsmitteln (5) zu lösen.

7. Vorrichtung gemäß Anspruch 5 oder 6, dadurch gekennzeichnet, daß die Unterstützungsmittel an den Unterstützungswänden (4) drehbar mittels Gelenken oder ähnlichem befestigt sind und auf diese Weise unterhalb des Teils am Stapelpunkt (P) weggedreht werden können.

8. Vorrichtung gemäß Anspruch 7, dadurch gekennzeichnet, daß jedes Unterstützungsmittel (5) aus einem aus Borsten bestehenden flexiblen Element gebildet ist.

9. Vorrichtung gemäß einem der vorhergehenden Ansprüche, dadurch gekennzeichnet, daß auf der Transferbahn des Teils auf der Horizontalfördereinrichtung (V) eine Verteilereinrichtung (7) angeordnet ist, um in einer Position der Verteilereinrichtung das von der Drehfördereinrichtung (K) umzulenkende Teil anzuhalten und in der anderen Position der Verteilereinrichtung das Passieren eines Teils zu ermöglichen, um es auf der Horizontalfördereinrichtung (V) zu dem Stapelpunkt (P) zu transportieren.

10. Vorrichtung gemäß einem der vorhergehenden Ansprüche, dadurch gekennzeichnet, daß an dem Umlenkpunkt des Teils auf der Horizontalfördereinrichtung (V) eine Unterstützungsführung (8) oder ähnliches angeordnet ist, um ein drehbares Teil auf die von den Unterstützungsmitteln (5) gebildete Unterstützung in der geeignetesten Position zu plazieren und um zu verhindern, daß die Unterstützungsmittel (5) mit einem den Umlenkpunkt passierenden Teil in Eingriff gelangt.

11. Vorrichtung gemäß einem der vorhergehenden Ansprüche, dadurch gekennzeichnet, daß eine im wesentlichen senkrechte Stapelwelle (U) oder ähnliches an dem Stapelpunkt (P) angeordnet ist, um die von der Horizontalfördereinrichtung (V) und der Drehfördereinrichtung (K) kommenden Teile zu stapeln.

12. Vorrichtung gemäß einem der Ansprüche 5 bis 11, dadurch gekennzeichnet, daß nahe wenigstens einer der Unterstützungswände (4) oder ähnliches der Drehfördereinrichtung (K) eine Rutschsperre (9) oder ähnliches vorgesehen ist, um das Teil in einer geeigneten Entfernung von der Achse (6) oder ähnlichem zu halten, die als Mittelpunkt der Drehfördereinrichtung (K) dient.

## Revendications

1. Appareil pour emballer des pièces ayant des structures différentes sur les côtés opposés de leurs plans, telles que des plaques à pointes, ledit appareil comportant un convoyeur horizontal (V) pour transporter une pièce à un point d'empilage (P) de façon de façon qu'une structure de la pièce qui augmente la hauteur d'empilage des pièces, telle que les pointes saillantes de la plaque à pointes, soit tournée vers une direction, et un second convoyeur pour transporter une pièce, l'appareil comportant en outre des moyens pour retourner la pièce transportée par le second convoyeur dans une position où la structure de la pièce est tournée vers la direction opposée, et pour la poser sur la pièce précitée au point d'empilage (P), les structures desdites pièces étant ainsi placées l'une contre l'autre pour réduire la hauteur d'empilage, **caractérisé** en ce que le convoyeur horizontal (V) est adapté pour transporter les pièces directement jusqu'au point d'empilage (P) et le second convoyeur est une convoyeur de retournement (K) qui est adapté pour retourner chaque pièce à retourner progressivement vers une position d'empilage pendant son déplacement de transfert le long d'un chemin de transfert qui est parallèle au convoyeur horizontal (V) et pour la transporter jusqu'au point d'empilage (P) situé à l'extrémité du chemin de transfert.

2. Appareil selon la revendication 1, **caractérisé** en ce que le chemin de transfert du convoyeur de retournement (K) est adapté pour agir dans le même plan vertical parallèle au chemin de transfert du convoyeur horizontal (V).

3. Appareil selon la revendication 2, **caractérisé** en ce que le convoyeur de retournement (K) est adapté pour recevoir les pièces à retourner du convoyeur horizontal (V) au moyen de son déplacement de transfert.

4. Appareil selon la revendication 2 ou 3, **caractérisé** en ce que le chemin de transfert du convoyeur de retournement (K) a la forme d'une partie de cercle, de préférence d'un demi-cercle, et est situé au dessus du chemin de transfert du convoyeur horizontal (V).

5. Appareil selon la revendication 4, **caractérisé** en ce que le convoyeur de retournement (K) comporte deux parois de support (4) ou similaires sensiblement verticales en forme de disque, le convoyeur horizontal (V) étant placé partiellement entre elles, et les parois étant munies de moyens de support (5) et adaptées pour tourner autour d'une axe (6) ou similaire sensiblement horizontal de telle sorte qu'une pièce à retourner située sur le convoyeur horizontal (V) soit levée du convoyeur horizontal (V) pendant qu'elle est soutenue par les moyens de support (5), soit retournée dans une position inverse après que le convoyeur de retournement (K) a fait un demi-tour, et soit transférée au point d'empilage (P).

6. Appareil selon la revendication 5, **caractérisé** en ce qu'un ou plusieurs moyens de dégagement (11) se trouvent au point d'empilage (P) pour dégager la pièce hors des moyens de support (5).

7. Appareil selon la revendication 5 ou 6, **caractérisé** en ce que les moyens de support sont fixés sur les parois de support (4) de façon pivotante par l'intermédiaire de charnières ou similaires et ainsi adaptés pour tourner de dessous la pièce au point d'empilage.

8. Appareil selon la revendication 7, **caractérisé** en ce que chaque moyen de support (5) est formé d'un organe flexible qui est constitué par des poils.

9. Appareil selon l'une quelconque des revendications précédentes, **caractérisé** en ce que sur le chemin de transfert de la pièce sur le convoyeur horizontal (V) est disposé un distributeur (7) pour arrêter une pièce à faire dévier vers le convoyeur de retournement (K) dans une position du distributeur et pour permettre une pièce de passer dans l'autre position du distributeur pour la transporter sur le convoyeur horizontal (V) jusqu'au point d'empilage.

10. Appareil selon l'une quelconque des revendications précédentes, **caractérisé** en ce qu'au point de déviation de la pièce sur le convoyeur horizontal (V) est disposée une guide de support (8) ou similaire pour placer une pièce à retourner sur le soutien produit par les moyens de support (5) situés dans la position la plus convenable et pour empêcher l'engagement des moyens de support (5) avec une pièce passant devant le point de déviation.

11. Appareil selon l'une quelconque des revendications précédentes, **caractérisé** en ce que au point d'empilage (P) est situé un couloir d'empilage (U) ou similaire sensiblement vertical pour empiler les pièces arrivant du convoyeur horizontal (V) et du convoyeur de retournement (K).

12. Appareil selon l'une quelconque des revendications 5 à 11, **caractérisé** en ce qu'adjacent à au moins l'une des parois des supports (4) ou similaires (K) du convoyeur de retournement (K) est disposé un barrage de glissement (9) ou similaire pour maintenir la pièce à une distance correcte du axe (6) ou similaire servant de moyeu du convoyeur de retournement (K).
